# EUROPÄISCHE PATENTSCHRIFT

(11) **EP 3 730 909 B1**
(45) Veröffentlichungstag und Bekanntmachung des Hinweises auf die Patenterteilung: **10.08.2022**
(21) Anmeldenummer: 20160642.3
(22) Anmeldetag: 03.03.2020
(51) Int. Cl.: G01G 11/04, B26D 5/00

(54) **VERFAHREN UND VORRICHTUNG ZUM WIEGEN EINER LEBENSMITTELPORTION MIT GEWICHTSVERLAUFBESTIMMUNG**
METHOD AND DEVICE FOR WEIGHING A FOOD PORTION WITH WEIGHT GRADIENT IDENTIFICATION
PROCÉDÉ ET DISPOSITIF DE PESAGE D'UNE PARTIE DE DENRÉE ALIMENTAIRE À DÉTERMINATION DU POIDS

(30) Priorität: 26.04.2019 DE 102019206032
(43) Veröffentlichungstag der Anmeldung: 28.10.2020
(73) Patentinhaber: Weber Maschinenbau GmbH Breidenbach, 35236 Breidenbach (DE)
(72) Erfinder: Lischinski, Gerd, 17349 Schönbeck (DE)
(74) Vertreter: Grünecker Patent- und Rechtsanwälte PartG mbB

(56) Entgegenhaltungen:
- EP-A1- 2 362 195

## Beschreibung

Die vorliegende Erfindung betrifft ein Verfahren zum Wiegen einer Lebensmittelportion und ein Lebensmittelverarbeitungssystem, welches zur Ausführung dieses Verfahrens geeignet ist.

Lebensmittelverarbeitungssysteme beispielsweise zum Aufschneiden und Portionieren von Fleisch-, Wurst-, oder Käseprodukten umfassen üblicherweise eine Schneidestation zum Schneiden von Scheiben von einem Produktlaib zu einer Lebensmittelportion und eine Fördereinrichtung zum Transport der geschnittenen Lebensmittelportionen zu einer Verpackungsstation. Dort werden die Lebensmittelportionen verkaufsfertig verpackt. Um ein gleichbleibendes Gewicht der Lebensmittelportionen zu erreichen, ist es bekannt, die Lebensmittelportionen zu wiegen, wozu häufig eine Wägeeinrichtung in Verbindung mit dem Fördersystem verwendet wird. So kann beispielsweise das Gewicht der Lebensmittelportion direkt beim Aufschneiden ermittelt werden, indem eine Wägevorrichtung mit einem auf einer Waage gelagerten Fördermittel direkt unterhalb des Schneidmessers der Schneidstation angeordnet ist und so die Produktscheiben beim Schneiden direkt auf das Fördermittel der Wägevorrichtung herabfallen. Alternativ oder zusätzlich kann ein stromabwärts gelegenes Fördermittel als Teil einer Wägevorrichtung auf einer Waage gelagert sein, um das Gewicht einer Lebensmittelportion zu bestimmen. So wird sichergestellt, dass eine Lebensmittelportion nur dann in der Verpackungsstation verpackt wird, wenn sie einem gewünschten Gesamtgewicht entspricht. Zudem sind Wiegeverfahren bekannt, welche Störfaktoren bei der Gewichtsbestimmung, wie beispielsweise Schwingungen und Einpendeln der Waage, eliminieren, oder sich die Dynamik des Aufschneidens und Herabfallens der Scheiben auf die Waage zu Nutze machen. So beschreibt die DE 10 2015 215 056 A1 eine Gewichtsbestimmung anhand des Stoßimpulses, welchen die von einem Produktlaib geschnittene Scheibe beim Herabfallen auf eine Messvorrichtung auf diese überträgt.

Aus der EP 2 362 195 A1 ist eine Wiegevorrichtung bekannt, bei welcher ein Wiegegut mittels eines Zuführbandes und eines Abführbandes über eine dazwischen angeordnete Rolle als Gewichtsaufnehmer gefördert wird. Das Gewichtssignal wird über die Zeit integriert um das Gesamtgewicht des Wiegeguts zu bestimmen.

Die bekannten Verfahren und Vorrichtungen zum Wiegen von Lebensmittelportionen, welche bislang in Lebensmittelverarbeitungssystemen zum Einsatz kommen, können jedoch eine Vielzahl von Arten nicht korrekt aufgeschnittener Lebensmittelportionen nicht automatisch erkennen.

Aufgabe der Erfindung ist, ein Verfahren und eine Vorrichtung zum Wiegen von Lebensmittelportionen bereitzustellen, welche eine verbesserte Erkennung fehlerhaft geschnittener Lebensmittelportionen ermöglichen.

Die Aufgabe wird erfindungsgemäß gelöst durch ein Verfahren zum Wiegen einer Lebensmittelportion gemäß Anspruch 1, sowie ein Lebensmittelverarbeitungssystem gemäß Anspruch 9. Vorteilhafte Weiterbildungen der Erfindung sind in den Unteransprüchen angegeben.

Ein erfindungsgemäßes Verfahren zum Wiegen einer Lebensmittelportion, umfasst folgende Verfahrensschritte:
- Auffördern einer Lebensmittelportion von einem ersten Fördermittel auf eine stromabwärts angeordnete Wägevorrichtung und/oder Abfördern einer Lebensmittelportion von der Wägevorrichtung auf ein zweites, stromabwärts angeordnetes, Fördermittel,
- Erfassen eines Gewichtsverlaufs mittels der Wägevorrichtung beim Auf- und/oder Abfördern der Lebensmittelportion,
- Auswerten des erfassten Gewichtsverlaufs mittels einer elektronischen Auswerteeinheit.

Das Erfassen des Gewichtsverlaufs der Lebensmittelportion bedeutet insbesondere die Aufnahme einer Vielzahl von Messwerten einer Masse beziehungsweise Gewichtskraft über einen bestimmten Zeitraum. Üblicherweise ist die Kurve des Gewichtsverlaufs beim Auffördern auf die Wägevorrichtung ansteigend bis zu einem Maximum und abfallend bis zur Nulllinie beim Abfördern von der Wägevorrichtung. Die Gewichtsmessung wird somit von dem eindimensionalen Erfassen eines Gesamtgewichts der Lebensmittelportion quasi um eine räumliche Dimension erweitert, womit nicht nur das gewünschte Portionsgewicht, sondern auch die Anordnung der einzelnen Scheiben einer Lebensmittelportion überprüft werden kann, wie dies im Folgenden weiter erläutert ist. Eine Kontrolle der Anordnung der Scheiben einer Lebensmittelportion, also die korrekte Stapelung von Scheiben in geraden oder geschindelten Stapeln, war bislang nur mittels einer optischen Sensorik mit entsprechender Bildverarbeitung oder durch Sichtkontrolle durch Kontrollpersonen möglich. Durch das Verfahren dieser Erfindung ist diese Kontrolle nun mittels einer bereits vorhandenen Wägevorrichtung möglich. Es werden somit erhebliche Kosten für Personal oder zusätzliche technische Ausrüstung gespart und gleichzeitig eine Qualitätssicherung ermöglicht, um Lebensmittelportionen zu produzieren, welche stets allen Anforderungen genügen.

Üblicherweise werden ein oder mehrere Messpunkte des erfassten Gewichtsverlaufs mit Soll-Werten verglichen und insbesondere Differenzwerte ermittelt. So kann der gemessene Gewichtsverlauf mit einem zu erwartenden Gewichtsverlauf einer korrekt gestapelten Lebensmittelportion verglichen werden. Dabei unterscheiden sich die Soll-Gewichtsverläufe je nach Produkt und Stapelform. Beispielsweise zeigt eine geschindelte Lebensmittelportion einen anderen Gewichtsverlauf als gerade gestapelte Lebensmittelscheiben. Vorteilhafterweise werden die Soll-Gewichtsverläufe, gegen die verglichen werden soll, vor Inbetriebnahme ausgewählt, so dass während der Produktion die Differenzwerte bestimmt werden können. Die Differenzwerte können eine Abweichung der räumlichen Anordnung der einzelnen Scheiben einer Lebensmittelportion von der vorhergesehenen Anordnung anzeigen. So können beispielsweise eine oder mehrere Scheiben quer zur Transportrichtung, längs zur Transportrichtung oder beides versetzt sein. Dabei können die Scheiben weiterhin überlappen oder es kann eine Lücke vorhanden sein. Der Vergleich der Messwerte mit Soll-Werten läuft während des Betriebs vorteilhafterweise automatisch, so dass keine Sichtprüfung durch einen Bediener mehr nötig ist, um fehlerhaft gestapelte Lebensmittelportionen zu erkennen. Dies spart Kosten und ermöglicht zudem eine schnellere Taktung der gesamten Maschine.

Vorzugsweise werden ein oder mehrere Messpunkte des erfassten Gewichtsverlaufs mit vorgegebenen Toleranzgrenzen verglichen. So können Stapel von Scheiben, welche eine nur leicht vergrößerte Stapellänge aufweisen, unterschieden werden von Stapeln, welche eine bereits zu große Stapellänge aufweisen, um in die vorhergesehene Verpackung eingelegt zu werden. So können Lebensmittelportionen deren Gewichtsverlauf sich noch innerhalb der Toleranzgrenzen befindet weiterverarbeitet werden, wohingegen Lebensmittelportionen mit stärker abweichendem Gewichtsverlauf automatisch aussortiert oder gesondert weiterverarbeitet und korrigiert werden können. Dadurch ist sichergestellt, dass auch die weiteren Produktionsschritte, insbesondere das Einlegen der Lebensmittelportion in die Produktverpackung und das gasdichte Verschließen selbiger, störungsfrei stattfinden können. Der Maschinenbetreiber kann damit einerseits sicher sein, dass die öffentliche Darstellung seiner Produkte stets einwandfrei ist und Verpackungen, bei denen eine Scheibe in einer Siegelnaht eingeklemmt ist, nicht vorkommen oder in den Handel gelangen, und andererseits nur Lebensmittelportionen ausgesondert werden, bei denen dies auch wirklich nötig ist. Der automatische Vergleich mit vorgegebenen Toleranzgrenzen ermöglicht zudem eine Qualitätsanalyse anhand fester Kriterien, ohne dass eine subjektive Bewertung durch einen Bediener jeweils neu vorgenommen werden müsste.

In einer gängigen Variante wird ein Maximum des Gewichtsverlaufs ermittelt. Das Maximum des Gewichtsverlaufs entspricht dem Gesamtgewicht der Lebensmittelportion unter der Voraussetzung, dass alle Scheiben der Lebensmittelportion vollständig auf der Wägevorrichtung angeordnet sind, also insbesondere nicht auf einem Maschinenrand oder einer benachbarten Transportspur aufliegen und auch längs der Transportrichtung nicht auf einem benachbarten Zu- oder Abfördermittel aufliegen. Somit dient das Maximum des Gewichtsverlaufs als Nachweis von stark auseinandergezogenen oder seitlich überstehenden Lebensmittelportionen. Es dient deshalb als Indikator für eine fehlerhaft gestapelte Lebensmittelportion, so dass diese aussortiert und Störungen der nachfolgenden Förderstrecke bzw. Verpackungsstation vermieden werden.

In einer vorteilhaften Variante wird die Lebensmittelportion von einem Produktlaib mittels einer Schneidemaschine geschnitten und fällt direkt auf die Wägevorrichtung herab, welche dazu unterhalb des Messers angeordnet ist. Dabei wird der Gewichtsverlauf erfasst. Durch die Analyse des zusätzlichen Gewichts, das durch eine abgeschnittene Scheibe zum bisherigen Gewicht hinzugefügt wird, kann ein nicht korrekter Schnitt erkannt werden, beispielsweise wenn eine Scheibe zu dünn oder zu dick geschnitten wurde, der Produktlaib und somit die Scheibe eine Fehlstelle wie zum Beispiel ein Loch aufweist, oder die Scheibe nicht korrekt auf die Wägevorrichtung, sondern zum Beispiel teilweise auf einem seitlichen Maschinenrand zum Liegen kommt. Ist die Lebensmittelportion vollständig geschnitten, so schließt sich die Messung des Gewichtsverlaufs beim Abfördern von der Wägevorrichtung an. Die Kombination aus beiden Gewichtsverläufen, also dem beim Aufschneiden der Lebensmittelportion und dem beim Abfördern der Lebensmittelportion von der Wägevorrichtung, liefert dann eine besonders zuverlässige Aussage über den korrekten Schnitt der Lebensmittelportion. Zudem können Aussagen über den Produktlaib und über die Einstellung des Schneidmessers getroffen und Korrekturen an den Einstellungen der Schneidmaschine vorgenommen werden.

Vorzugsweise wird eine Position der Lebensmittelportion mittels eines Sensors erfasst, wobei dieser ein Signal an die Auswerteeinheit ausgibt, um die Erfassung der Gewichtskraft der Lebensmittelportion zu veranlassen. Der Sensor, der eine Photodiode, Lichtschranke oder eine andere geeignete Art sein kann, kann beispielsweise das Vorbeifahren einer Lebensmittelportion kurz vor der Wägevorrichtung registrieren und den Beginn einer neuen Messung auslösen oder kennzeichnen. Ebenso ist es denkbar, zusätzlich oder alternativ dazu unmittelbar nach der Wägevorrichtung einen Sensor zu platzieren, so dass beispielsweise sichergestellt ist, dass eine erste Lebensmittelportion die Wägevorrichtung vollständig verlassen hat, bevor das Auffördern und Messen einer zweiten Lebensmittelportion stattfindet. Das Signal des Sensors würde dabei also eine Freigabe auslösen, wenn die Lebensmittelportion den Erfassungsbereich des Sensors verlässt. Ebenso kann die Erfassung des Maximums des Gewichtsverlaufs anhand des Sensorsignals auf Plausibilität überprüft werden. Beispielsweise kann bestimmt werden, dass sich die Lebensmittelportion zwischen beiden Sensoren befindet, wenn ein Sensorsignal am vorderen Ende der Wägevorrichtung für die betreffende Lebensmittelportion ausgelöst worden, jedoch nicht mehr aktiv ist, und zusätzlich ein Sensorsignal am hinteren Ende der Wägevorrichtung noch nicht ausgelöst worden ist. Die Verwendung einer oder mehrere solcher Sensoren würde also die gemessenen Daten und damit deren Verlässlichkeit zusätzlich bestätigen.

In einer bevorzugten Variante löst ein externes Signal, insbesondere von einer Schneidemaschine, die Erfassung der Gewichtskraft der Lebensmittelportion aus. So kann beispielsweise nach dem Schnitt der gewünschten Anzahl von Scheiben mit der Messung des Gewichtsverlaufs sowie des Gesamtgewichts der Lebensmittelportion begonnen werden. Damit können die Messwerte der Gewichtsbestimmung mit größerer Verlässlichkeit verarbeitet werden, da bekannt ist, wann welcher Sollwert, beispielsweise das Gesamtgewicht, zu erwarten ist, also beispielsweise wenn die gewünschte Anzahl von Scheiben geschnitten ist. Das Signal kann zudem allgemein verwendet werden um den Weitertransport der Lebensmittelportion zu veranlassen und einen neuen Takt des Lebensmittelverarbeitungssystems zu starten.

Typischerweise gibt eine Steuerungseinheit in Abhängigkeit des erfassten Gewichtsverlaufs, Signale zum Steuern eines Weitertransports der Lebensmittelportion aus. So können beispielsweise Sortierbänder gesteuert werden, um fehlerhafte Lebensmittelportionen einer manuellen Korrektur zuzuführen oder sie auszusortieren. So können entsprechende Fördermittel eine Bandlücke bilden, geschwenkt werden oder in Form einer Wippe umgeklappt werden. Solche Sortierbänder sind üblicherweise stromabwärts der Wägevorrichtung angeordnet. Ebenso ist es möglich, das Fördermittel der Wägevorrichtung selbst entsprechend zu steuern und beispielsweise zur Seite zu klappen, um eine Lebensmittelportion direkt auszusortieren. Des Weiteren können Gruppierbänder vorhanden sein, um zerrissene Portionen zusammenführen. Alle diese Vorrichtungen können automatisch bei Erhalt des Signals, dass es sich um eine fehlerhafte Portion handelt, ihre entsprechende Funktion ausführen. Somit ist kein manueller Eingriff nötig bzw. beschränkt sich auf die anschließende Korrektur der fehlerhaften Lebensmittelportion.

In einer weiteren vorteilhaften Variante wird in zwei oder mehreren parallelen Transportspuren jeweils ein Gewichtsverlauf einer Lebensmittelportion mittels der Wägevorrichtung beim Auf- und/oder Abfördern erfasst. So kann auch bei Lebensmittelverarbeitungssystemen, welche mehrere Transportspuren aufweisen, für jede dieser Transportspuren der korrekte Aufschnitt der Lebensmittelprodukte überwacht werden. Zusätzlich können die Messwerte nebeneinanderliegender Transportspuren vergleichend ausgewertet werden. So kann beispielsweise ein von den Soll-werten abweichender Gewichtsverlauf einer Spur mit dem parallel aufgenommenen Gewichtsverlauf einer Nachbarspur verglichen werden, wodurch eine seitlich verschobene Scheibe eines Produktstapels, welche auf der Nachbarspur aufliegt, besonders zuverlässig erkannt wird.

Ein erfindungsgemäßes Lebensmittelverarbeitungssystem umfasst eine Wägevorrichtung, ein erstes Fördermittel und/oder ein zweites Fördermittel, wobei das erste Fördermittel angeordnet ist eine Lebensmittelportion auf die Wägevorrichtung aufzufördern und das zweite Fördermittel angeordnet ist eine Lebensmittelportion von der Wägevorrichtung abzufördern, und wobei die Wägevorrichtung eine Waage umfasst. Das Lebensmittelverarbeitungssystem umfasst des Weiteren eine elektronische Auswerteeinheit, welche dazu konfiguriert ist, einen Gewichtsverlauf beim Auffördern der Lebensmittelportion auf die Wägevorrichtung und/oder einen Gewichtsverlauf beim Abfördern der Lebensmittelportion von der Wägevorrichtung zu erfassen und insbesondere auszuwerten. Üblicherweise umfasst die Wägevorrichtung dabei ebenfalls ein Fördermittel, welches mit der Waage verbunden bzw. auf dieser gelagert ist, sodass die Lebensmittelportion weitertransportiert und deren Gewicht bestimmt werden kann. Die Auswerteeinheit ist dazu konfiguriert, die von der Waage erhaltenen Daten mittels entsprechendem Speicher und Prozessor digital zu speichern und zu verarbeiten, wie dies von üblichen Computersystemen bekannt ist. Bei der Waage kann es sich um jeden für den relevanten Gewichtsbereich geeigneten Typ zur elektronischen Gewichtserfassung, beispielsweise mittels Piezoelement oder Dehnungsmessstreifen, handeln. Somit kann der Gewichtsverlauf mit ausreichend hoher Präzision und elektronischer Weiterverarbeitung der digitalen Daten erfasst werden.

Vorzugsweise ist die Auswerteeinheit dazu konfiguriert, den ermittelten Gewichtsverlauf mit Soll-Werten zu vergleichen und Differenzwerte zu ermitteln. Die Soll-Werte sind dazu üblicherweise in einer Speichereinheit gespeichert, wobei ein Bediener die Datensätze entsprechend der gerade auf der Maschine zu verarbeitenden Produktarten und Portionsgrößen auswählen kann. Üblicherweise ist das System auch dazu geeignet durch entsprechende Programmierung neue oder geänderte Datensätze zu speichern, sodass das Lebensmittelverarbeitungssystem an geänderte Anforderungen und Produkte angepasst werden kann. Durch die automatische Bestimmung der Differenzwerte können ohne manuellen Aufwand und damit besonders kostengünstig fehlerhafte Lebensmittelportionen festgestellt werden.

In einer Variante umfasst das Lebensmittelverarbeitungssystem einen Sensor, welcher dazu konfiguriert ist, eine Position der Lebensmittelportion zu erfassen und ein Signal an die Auswerteeinheit zu senden, um eine Gewichtsmessung zu veranlassen. Der Sensor kann beispielsweise eine Fotodiode, eine Lichtschranke, ein Ultraschallsensor oder jede andere geeignete Art sein. Entsprechend seiner Anordnung können Zeitpunkte definiert werden, zu denen Gewichtsverlaufsmessungen gestartet, aber auch wieder gestoppt werden. So kann, wie bereits oben erläutert, beispielsweise am Ende des ersten Fördermittels ein Sensor angeordnet sein, welcher die Gewichtsverlaufsmessung startet, da die Lebensmittelportion kurz nach Passieren des Sensors auf die Wägevorrichtung gefördert wird. Ebenso kann bei anschließenden Wegfall des Signals und gegebenenfalls nach kurzer, genau definierter, zeitlicher Verzögerung das Gesamtgewicht auf der Wägevorrichtung erwartet werden. Entsprechende Kontrollmechanismen können auch bei einem Sensor am zweiten Fördermittel implementiert werden, welche zum Beispiel den Stopp der Gewichtsverlaufsmessung auslösen. Entsprechende Sensoren bieten also einen zweiten Kontrollmechanismus, welcher die ermittelten Messwerte zusätzlich verifiziert.

In einer vorteilhaften Variante weist das Lebensmittelverarbeitungssystem ein Gruppierband zum Zusammenfahren von Lebensmittelportionen auf, wobei eine Steuerungseinheit dazu konfiguriert ist, das Gruppierband in Abhängigkeit des erfassten Gewichtsverlaufs zu steuern. Das Gruppierband kann sich beispielsweise mit einer langsameren Geschwindigkeit als das ihm stromaufwärts voranstehende Fördermittel bewegen, wodurch eine Lebensmittelportion, welche auseinandergezogen ist, wieder in die gewünschte Anordnung gebracht werden kann. Die Steuerungsvorrichtung gibt dazu entsprechende Signale an das Gruppierband bzw. den dieses antreibenden Motor aus, um Dauer, Zeitpunkt und Geschwindigkeit der Bewegung des Gruppierbandes zu steuern. Dies kann wiederum basierend auf den Daten der Auswerteeinheit stattfinden, welchen die Ermittlung des Gewichtsverlaufs der betreffenden Lebensmittelportion zu Grunde liegt. Wurde kein Korrekturbedarf festgestellt, so kann das Gruppierband beispielsweise dauerhaft in der Förderstrecke integriert sein und sich mit gleicher Geschwindigkeit wie das vorangehende Fördermittel bewegen. Somit ist eine automatische Korrektur von Lebensmittelportionen möglich, wodurch manuelle Eingriffe oder das Aussortieren von Lebensmittelportionen reduziert werden können.

Idealerweise weist das Lebensmittelverarbeitungssystem ein Sortierband zum Sortieren von Lebensmittelportionen auf, wobei eine Steuerungseinheit dazu konfiguriert ist, das Sortierband in Abhängigkeit des erfassten Gewichtsverlaufs zu steuern. Wird eine Lebensmittelportion als fehlerhaft erkannt, kann das Sortierband derart gesteuert werden, dass die Lebensmittelportion aus der Hauptförderlinie abgezweigt wird und entweder aussortiert oder einer manuellen Korrektur zugeführt wird. Dies kann beispielsweise durch Wegklappen des Sortierbands in Form einer Wippe, seitliches Schwenken, seitliches Verfahren senkrecht zur Transportrichtung, das Bilden einer Bandlücke durch Schwenken nach unten, das Einfahren eines Schiebers oder Ähnlichem erfolgen. Sinnvollerweise geschieht dies direkt nach der Wägevorrichtung. Durch das Aussortieren der fehlerhaften Lebensmittelportion werden Störungen im weiteren Verlauf des Lebensmittelverarbeitungssystems vermieden. Dabei ist es besonders sinnvoll, die fehlerhafte Lebensmittelportion direkt nach der Wägevorrichtung auszusortieren, so dass keine Durchschleusung mehr durch die gesamte Linie erfolgt und im nachgeschalteten Formatbildungsbereich eine entstandene Portionslücke ausgeglichen werden kann.

In einer bevorzugten Variante umfasst die Wägevorrichtung ein schwenkbares Fördermittel. So kann direkt eine als fehlerhaft erkannte Lebensmittelportion aussortiert werden, womit eine Störung des weiteren Produktionsablaufs vermieden wird. Wie zuvor für das Sortierband beschrieben, ist es denkbar, das Fördermittel der Wägevorrichtung hoch zu klappen, also einseitig anzuheben, sodass die Lebensmittelportion herabgleitet oder das Fördermittel horizontal zu schwenken, sodass die Lebensmittelportion zu einem anschließenden Fördermittel oder einer Abwurfstelle bewegt wird.

In einer Variante umfasst das Lebensmittelverarbeitungssystem eine Schneidemaschine, welche die Lebensmittelportion in ein oder mehreren Scheiben durch Schneiden von einem Produktlaib auf die Wägevorrichtung portioniert. Prinzipiell kann unterhalb der Schneidemaschine ein Fördermittel angeordnet sein, welches die fertig geschnittene Lebensmittelportion weiter zu der Wägevorrichtung transportiert, oder die Lebensmittelportion kann direkt auf die Wägevorrichtung bzw. auf dessen Fördermittel aufgeschnitten werden. In letzterem Fall entfällt also ein Transportschritt, wodurch eine Zeitersparnis erreicht und die Produktionsleistung des Lebensmittelverarbeitungssystems erhöht wird. Dabei kann der Gewichtsverlauf beim Abfördern der Lebensmittelportion von der Wägevorrichtung auf das nachgeordnete Fördermittel bestimmt werden.

Zweckmäßig weist die Wägevorrichtung zwei oder mehrere parallele Transportspuren mit jeweils einer Waage auf. So kann in Lebensmittelverarbeitungssystemen mit zwei oder mehreren parallelen Produktionsspuren für jede dieser Linien der Gewichtsverlauf der Lebensmittelportionen bestimmt werden. Zusätzlich können die Messungen benachbarter Transportspuren kombiniert werden, womit erkannt werden kann, wenn beispielsweise eine Scheibe von einer Transportspur übersteht und auf der benachbarten Transportspur aufliegt. Da die Lebensmittelportionen auf den Transportspuren üblicherweise synchron laufen kann ein zu niedriges Gesamtgewicht der einen Transportspur mit einem zu hohen Gesamtgewicht der benachbarten Transportspur korrelieren, was zuverlässig ein Überlappen einer Scheibe indiziert.

Im Folgenden werden die Ausführungsbeispiele eines Verfahrens zum Wiegen einer Lebensmittelportion anhand der Figuren näher beschrieben. Dabei zeigen
- Figur 1:: eine schematische Ansicht eines Lebensmittelverarbeitungssystems bei welchem Lebensmittelportionen auf ein erstes Fördermittel aufgeschnitten werden,
- Figur 2:: einen Gewichtsverlauf einer korrekt gestapelten Lebensmittelportion gemessen in der Anordnung nach Figur 1,
- Figur 3:: eine schematische Ansicht eines Lebensmittelverarbeitungssystems bei welchem Lebensmittelportionen auf eine Wägevorrichtung aufgeschnitten werden,
- Figur 4:: einen Gewichtsverlauf einer korrekt gestapelten Lebensmittelportion gemessen in der Anordnung nach Figur 3,
- Figur 5:: eine schematische Ansicht eines Lebensmittelverarbeitungssystems bei welchem eine Lebensmittelportion fehlerhaft auf ein erstes Fördermittel aufgeschnitten wurde,
- Figur 6:: einen Gewichtsverlauf einer fehlerhaft gestapelten Lebensmittelportion gemessen in der Anordnung nach Figur 5,
- Figur 7:: eine schematische Ansicht eines Lebensmittelverarbeitungssystems bei welchem eine Lebensmittelportion fehlerhaft auf eine Wägevorrichtung aufgeschnitten wurde,
- Figur 8:: einen Gewichtsverlauf einer fehlerhaft gestapelten Lebensmittelportion gemessen in der Anordnung nach Figur 7,
- Figur 9:: eine schematische Draufsicht eines Lebensmittelverarbeitungssystems mit drei parallelen Transportspuren,
- Figur 10:: einen Gewichtsverlauf einer fehlerhaft gestapelten Lebensmittelportion bei welcher eine Scheibe auf einem seitlichen Rand oder einer parallelen Transportspur aufliegt,
- Figur 11:: eine schematische Draufsicht eines Lebensmittelverarbeitungssystems mit Sortierband.

Einander entsprechende Komponenten sind in den Figuren jeweils mit gleichen Bezugszeichen versehen.

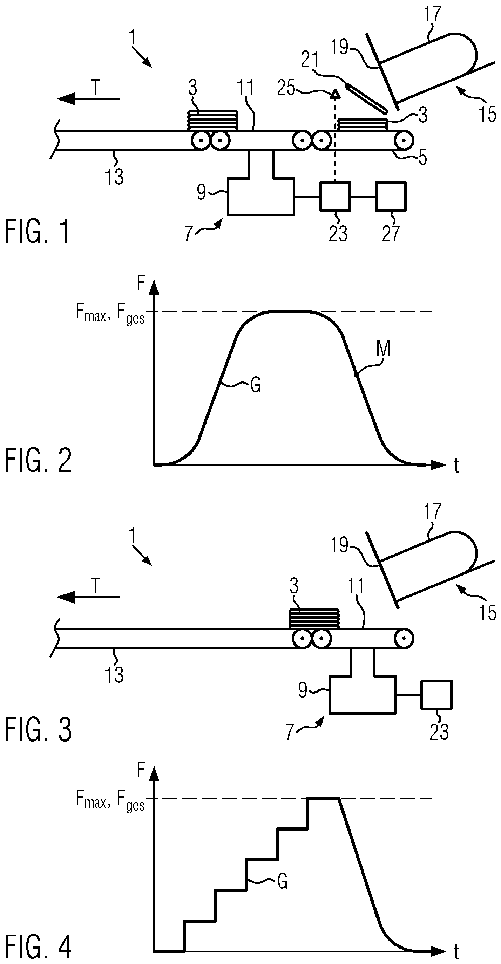

Figur 1 zeigt eine schematische Ansicht eines Lebensmittelverarbeitungssystems 1 bei welchem Lebensmittelportionen 3 auf ein erstes Fördermittel 5 aufgeschnitten werden. Das Lebensmittelverarbeitungssystem 1 umfasst des Weiteren eine Wägevorrichtung 7, welche wiederum eine Waage 9 und ein Fördermittel 11 aufweist, sowie stromabwärts ein zweites Fördermittel 13. Ebenfalls umfasst das Lebensmittelverarbeitungssystem 1 eine Schneidemaschine 15, welche von einem Produktlaib 17 mittels eines Messers 19, üblicherweise ein rotierendes Rund- oder Sichelmesser, einzelne Scheiben 21 schneidet, welche auf das erste Fördermittel 5 fallen und dort gestapelt werden. Dabei können, je nach Bewegung des ersten Fördermittels 5, verschiedene Stapelformen, insbesondere gerade Stapel oder geschindelte Stapel, gelegt werden. Generell kann eine Lebensmittelportion 3 eine oder mehrere Scheiben 21 umfassen. Die fertig gestapelte Lebensmittelportion 3 wird in Transportrichtung T von dem ersten Fördermittel 5 auf das Fördermittel 11 der Wägevorrichtung 7 bewegt. Das Fördermittel 11 der Wägevorrichtung 7 transportiert die Lebensmittelportion 3 wiederum zu dem zweiten Fördermittel 13, um sie den weiteren Arbeitsschritten zuzuführen. Das Fördermittel 11 der Wägevorrichtung 7 ist dabei auf der Waage 9 gelagert, sodass das Gewicht der Lebensmittelportion 3 erfasst werden kann, und zwar sowohl wenn sich die Lebensmittelportion 3 vollständig auf dem Fördermittel 11 befindet, als auch wenn sie auf dieses aufgefördert bzw. von diesem abgefördert wird. Eine elektronische Auswerteeinheit 23 ist mit der Waage 9 verbunden und ist dazu konfiguriert, die Signale der Waage 9 zu empfangen, zu verarbeiten und gegebenenfalls zu speichern. Ein Sensor 25 kann vorhanden sein, um die Lebensmittelportion 3 an einem bestimmten Ort, beispielsweise am Ende des ersten Fördermittels 5 zu erfassen und Signale zum Start oder Stopp einer Gewichtsverlaufsmessung auszugeben. Eine elektronische Steuerungseinheit 27 kann in Abhängigkeit des gemessenen Gewichtsverlaufs Signale zum Steuern von weiteren Fördermitteln, wie beispielsweise dem zweiten Fördermittel 13, welches auch Sortier- oder Gruppierbänder aufweisen kann, ausgeben. Die Fördermittel 5, 11, 13 können als Bandförderer, elektromagnetische Individualfördersysteme mit sogenannten Movern, oder als jede andere geeignete Art ausgebildet sein.

Figur 2 zeigt einen Gewichtsverlauf G einer korrekt gestapelten Lebensmittelportion 3, gemessen mittels der Wägevorrichtung 7 in der Anordnung nach Figur 1. Auf der X-Achse ist die Zeit t und auf der Y-Achse die Gewichtskraft F bzw. Masse der Lebensmittelportion 3 dargestellt. Der ansteigende Teil der Kurve des Gewichtsverlaufs G entspricht dem Auffördern der Lebensmittelportion 3 von dem ersten Fördermittel 5 auf das Fördermittel 11 der Wägevorrichtung 7. Der obere waagerechte Teil des Gewichtsverlaufs G entspricht dem Gewicht, welches gemessen wird wenn die Lebensmittelportion 3 sich vollständig auf dem Fördermittel 11 der Wägevorrichtung 7 befindet, wobei ein so ermitteltes Maximalgewicht Fmax in diesem Fall einem Soll-Gesamtgewicht Fges entspricht, wenn die Lebensmittelportion vollständig auf dem Fördermittel 11 der Wägevorrichtung 7 aufliegt. Der folgende abfallende Teil der Kurve des Gewichtsverlaufs G entspricht dem Abfördern der Lebensmittelportion 3 von dem Fördermittel 11 der Wägevorrichtung 7 auf das zweite Fördermittel 13. Die jeweilige Steigung des ansteigenden, sowie abfallenden Teils des Gewichtsverlaufs G hängt dabei von der Anordnung der einzelnen Scheiben der Lebensmittelportion 3 ab. So kann der Gewichtsverlauf G bei gerade übereinander gestapelten Scheiben steiler sein, als bei einer geschindelten Lebensmittelportion 3. Die Kurve des Gewichtsverlaufs G besteht aus einzelnen, miteinander verbundenen Messpunkten M, deren Zahl einer gewünschten "Samplingrate" also einer eingestellten Anzahl von Messungen pro Zeiteinheit entspricht und wovon hier einer beispielhaft markiert ist. Die Zahl der Messpunkte M hängt von der technischen Leistung der verwendeten Komponenten ab.

Figur 3 zeigt in einer schematischen Ansicht eine zweite Ausführungsform eines Lebensmittelverarbeitungssystems 1, bei welchem die Lebensmittelportion 3 direkt auf die Wägevorrichtung 7 aufgeschnitten wird. Somit kann das erste Fördermittel 5 (siehe Figur 1) entfallen. Es kann der Gewichtsverlauf G sowohl beim Aufschneiden der Lebensmittelportion 3 auf die Wägevorrichtung 7, als auch beim Abfördern von der Wägevorrichtung 7 erfasst werden.

Figur 4 zeigt einen Gewichtsverlauf G einer korrekt gestapelten Lebensmittelportion 3 gemessen mittels der Wägevorrichtung 7 in der Anordnung nach Figur 3. Jede Stufe des treppenartigen Anstiegs entspricht dem Gewicht einer einzelnen Scheibe 21, welche auf die Wägevorrichtung 7 herabfällt. Ist die Schneidemaschine 15 korrekt justiert, so wird mit Herabfallen der letzten Scheibe 21 das Maximalgewicht Fmax, welches dem Soll-Gesamtgewicht Fges der Lebensmittelportion 3 entspricht, erreicht. Anschließend wird die Lebensmittelportion 3 auf das zweite Fördermittel 13 abgefördert, was dem kontinuierlich abfallenden Teil des Gewichtsverlaufs G entspricht. Der Vergleich eines Messwerts mit einem Soll-Wert beinhaltet auch die oben beschriebene Berücksichtigung von Toleranzwerten.

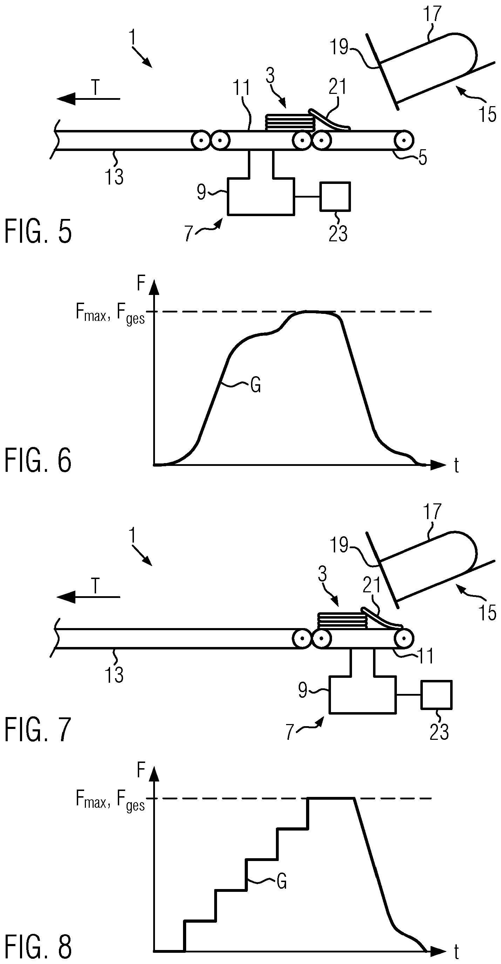

Figur 5 zeigt eine schematische Ansicht eines Lebensmittelverarbeitungssystems 1 der ersten Ausführungsform gemäß Figur 1 bei welchem eine Lebensmittelportion 3 fehlerhaft auf das erste Fördermittel 5 aufgeschnitten wurde. In der Darstellung ist beispielhaft eine Scheibe 21 zu sehen, welche teilweise von dem Hauptstapel der Lebensmittelportion 3 nach hinten überhängt. Dies könnte zum Beispiel geschehen, wenn beim Schneiden die Scheibe 21 kurzzeitig am Messer 19 anhaftet. Eine solche fehlerhaft gestapelte Lebensmittelportion 3 kann nicht mehr in eine vorgesehene Produktverpackung eingelegt werden.

Figur 6 zeigt einen Gewichtsverlauf G der fehlerhaft gestapelten Lebensmittelportion 3 entsprechend der Anordnung nach Figur 5. Zunächst steigt der Gewichtsverlauf G beim Auffördern auf die Wägevorrichtung 7 ähnlich wie im Fall einer korrekt gestapelten Lebensmittelportion 3 gemäß Figur 2 an, erreicht dann aber erst verzögert, nach einem Abschnitt mit deutlich flacherem Anstieg, den Maximalwert Fmax, welcher dem erwarteten Gesamtgewicht Fges entspricht. Der Maximalwert Fmax entspricht nur dann dem erwarteten Gesamtgewicht Fges, wenn die Lebensmittelportion 3 zwar möglicherweise fehlerhaft gestapelt ist, jedoch nicht weiter auseinandergezogen ist, als dass alle Scheiben 21 noch auf das Fördermittel 11 der Wägevorrichtung 7 passen. Beim Abfördern der Lebensmittelportion 3 von der Wägevorrichtung 7 entspricht der Gewichtsverlauf G zunächst wieder dem abfallenden Teil ähnlich Figur 2, erreicht den Nullwert jedoch wieder verzögert um einen flach verlaufenden Abschnitt, welcher der überstehenden Scheibe 21 entspricht. Wie man an dem dargestellten Gewichtsverlauf erkennen kann, kann eine solche fehlerhafte Lebensmittelportion 3 nicht allein durch Bestimmung des Maximal- bzw. Gesamtgewichts Fmax mit Vergleich zu dem erwarteten Gesamtgewicht Fges identifiziert werden, da beide Werte übereinstimmen, wenn sich die Lebensmittelportion 3 vollständig auf der Wägevorrichtung 7 befindet. Hingegen ist die Analyse des Gewichtsverlaufs G gemäß Figur 6 dazu geeignet, fehlerhaft gestapelte Lebensmittelportionen 3 zu erkennen, auch wenn das Gesamtgewicht Fmax der Vorgabe Fges entspricht.

Figur 7 zeigt eine schematische Ansicht eines Lebensmittelverarbeitungssystems 1 bei welchem eine Lebensmittelportion 3 fehlerhaft direkt auf eine Wägevorrichtung 7 aufgeschnitten wurde. Im Anschluss an den Aufschneidevorgang wird die Lebensmittelportion 3 von dem Fördermittel 11 der Wägevorrichtung 7 auf das zweite Fördermittel 13 abgefördert.

Figur 8 zeigt einen Gewichtsverlauf G einer fehlerhaft gestapelten Lebensmittelportion 3, gemessen in der Anordnung nach Figur 7. Der Anstieg des Gewichtsverlaufs G in treppenartiger Form entspricht dem in Figur 4. Wenn alle Scheiben 21 aufgeschnitten sind und vollständig auf dem Fördermittel 11 der Wägevorrichtung 7 aufliegen, so entspricht auch das gemessene Maximalgewicht Fmax dem zu erwartenden Gesamtgewicht Fges. Beim Abfördern der Lebensmittelportion 3 wird dann die abfallende Kurve des Gewichtsverlaufs G gemessen, wobei die Nulllinie wie im Fall von Figur 6 mit einer Verzögerung durch einen flachen Abschnitt erreicht wird. Auch hier ist zu erkennen, dass die fehlerhafte Stapelung erst durch die Bewegung der Lebensmittelportion 3 entlang der Transportrichtung T und dem dabei stattfindenden Übergang von der Wägevorrichtung 7 auf das zweite Fördermittel 13 identifiziert wird.

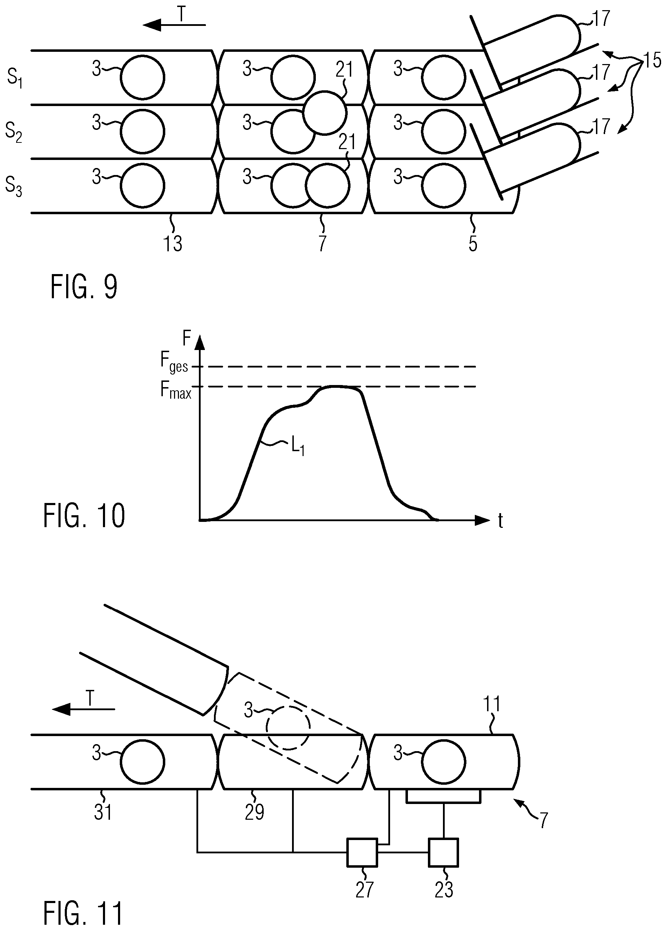

Figur 9 zeigt eine schematische Draufsicht eines Lebensmittelverarbeitungssystems 1 in einer Ausführungsform mit drei parallelen Transportspuren S1, S2, und S3. Mittels der Schneidemaschine 15 werden zunächst Lebensmittelportionen 3 aus von dem Produktlaib 17 geschnittenen Scheiben gebildet und anschließend auf die jeweilige Transportspur S1, S2, S3 der Wägevorrichtung 7 gefördert. Anschließend wird die jeweilige Lebensmittelportion 3 auf das zweite Fördermittel 13 abgefördert. Dabei wird separat für jede Transportspur S1, S2, S3 der Gewichtsverlauf G der jeweiligen Lebensmittelportion 3 beim Auffördern und Abfördern von der Wägevorrichtung 7 bestimmt. Beispielhaft ist auf der Wägevorrichtung 7 auf der ersten Transportspur S1 eine korrekt gestapelte Lebensmittelportion 3, auf der zweiten Transportspur S2 eine Lebensmittelportion 3, bei welcher eine Scheibe 21 auf die benachbarte Transportspur S1 übersteht, und auf der dritten Transportspur S3 eine Lebensmittelportion 3, bei welcher eine Scheibe 21 entgegen der Transportrichtung T versetzt ist, jedoch vollständig auf der Transportspur S3 aufliegt, gezeigt. Während der Gewichtsverlauf G einer fehlerhaften Stapelung entsprechend Transportspur S3 beispielsweise schon in Figur 6 gezeigt ist, wird der Gewichtsverlauf G einer fehlerhaften Stapelung entsprechend Transportspur S2 in Figur 10 gezeigt.

Figur 10 zeigt einen Gewichtsverlauf G einer fehlerhaft gestapelten Lebensmittelportion 3 bei welcher eine Scheibe 21 auf einem seitlichen Maschinenrand oder einer parallelen Transportspur S1, S2, S3 aufliegt, wie dies für die Lebensmittelportion 3 auf der Transportspur S2 der Wägevorrichtung 7 in Figur 9 dargestellt ist. Da die Scheibe 21 seitlich und nach hinten versetzt ist wird beim Auffördern auf die Wägevorrichtung 7 das Maximalgewicht Fmax verzögert bzw. unter Ausbildung eines Abschnitts flacher Steigung erreicht. Da die Scheibe 21 nicht vollständig auf der Transportspur S2 aufliegt, sondern auf die benachbarte Transportspur S1 übersteht wird auch nicht die erwartete Gesamtgewichtskraft Fges der Lebensmittelportion 3 gemessen, sondern ein niedrigeres Maximalgewicht Fmax. Beim Abfördern von der Wägevorrichtung 7 auf das zweite Fördermittel 13 wird der Nullwert wieder verzögert, erreicht.

Figur 11 zeigt eine schematische Draufsicht eines Lebensmittelverarbeitungssystems 1 mit einem Sortierband 29, welches Lebensmittelportionen 3, die nicht korrekt gestapelt sind, aussortieren kann. In der gezeigten Ausführungsform geschieht dies zum Beispiel durch Schwenken zur Seite, sodass die Lebensmittelportion 3 beispielsweise einer manuellen Korrektur zugeführt werden kann. Alternativ wäre auch ein Wegklappen, Einfahren eines Schiebers oder ähnliches möglich. Dabei steuert die elektronische Steuerungseinheit 27 das Sortierband 29 in Abhängigkeit der von der elektronischen Auswerteeinheit 23 erhaltenen Daten. Ebenso ist es möglich, dass fehlerhafte Lebensmittelportionen 3 direkt durch Wegklappen des Fördermittels 11 der Wägevorrichtung 7 aussortiert werden. Zusätzlich oder alternativ kann ein Gruppierband 31 vorhanden sein, welches, ebenfalls gesteuert durch die elektronische Steuerungseinheit 27, der Länge nach auseinandergezogene Lebensmittelportionen 3 wieder zusammenführt, diese also staucht, was üblicherweise durch unterschiedliche Transportgeschwindigkeiten zweier seriell angeordneter Fördermittel, in diesem Fall beispielsweise des Gruppierbands 31 und des vorangehenden Sortierbands 29 geschehen kann.

Ausgehend von den oben dargestellten Ausführungsformen eines Lebensmittelverarbeitungssystems 1 und eines Verfahrens zum Wiegen einer Lebensmittelportion 3 sind vielerlei Variationen derselben denkbar. So wäre eine Kombination mit einer optischen Überwachung der Stapelform mittels eines Videosystems und digitaler Bildverarbeitung möglich. Des Weiteren ist es denkbar, die Soll-Gewichtsverläufe zu bestimmen, indem die Gewichtsverläufe G von korrekt gestapelten Lebensmittelportionen 3 abgespeichert werden und somit als Referenz dienen.

## Patentansprüche

1. Verfahren zum Wiegen einer Lebensmittelportion (3), umfassend folgende Verfahrensschritte:
- Auffördern einer Lebensmittelportion (3) von einem ersten Fördermittel (5) auf eine stromabwärts angeordnete Wägevorrichtung (7) und/oder Abfördern einer Lebensmittelportion (3) von der Wägevorrichtung (7) auf ein zweites, stromabwärts angeordnetes, Fördermittel (13),
- Erfassen eines Gewichtsverlaufs (G) mittels der Wägevorrichtung (7) beim Auf- und/oder Abfördern der Lebensmittelportion (3),
- Auswerten des erfassten Gewichtsverlaufs (G) mittels einer elektronischen Auswerteeinheit (23), **dadurch gekennzeichnet, dass** ein oder mehrere Messpunkte (M) des erfassten Gewichtsverlaufs (G) mit Soll-Werten verglichen und insbesondere Differenzwerte ermittelt werden.

2. Verfahren nach Anspruch 1, **dadurch gekennzeichnet, dass** ein oder mehrere Messpunkte (M) des erfassten Gewichtsverlaufs (G) mit vorgegebenen Toleranzgrenzen verglichen werden.

3. Verfahren nach einem der vorangegangenen Ansprüche, **dadurch gekennzeichnet, dass** ein Maximum (Fₘₐₓ) des Gewichtsverlaufs (G) ermittelt wird.

4. Verfahren nach einem der vorangegangenen Ansprüche, **dadurch gekennzeichnet, dass** die Lebensmittelportion (3) von einem Produktlaib (17) mittels einer Schneidemaschine (15) geschnitten wird und auf die Wägevorrichtung (7) herabfällt, wobei der Gewichtsverlauf (G) erfasst wird.

5. Verfahren nach einem der vorangegangenen Ansprüche, **dadurch gekennzeichnet, dass** eine Position der Lebensmittelportion (3) mittels eines Sensors (25) erfasst wird, wobei dieser ein Signal an die Auswerteeinheit (23) ausgibt, um die Erfassung der Gewichtskraft (F) der Lebensmittelportion (3) zu veranlassen.

6. Verfahren nach einem der vorangegangenen Ansprüche, **dadurch gekennzeichnet, dass** ein externes Signal, insbesondere von einer Schneidemaschine (15), die Erfassung der Gewichtskraft (F) der Lebensmittelportion (3) auslöst.

7. Verfahren nach einem der vorangegangenen Ansprüche, **dadurch gekennzeichnet, dass** eine Steuerungseinheit (27) in Abhängigkeit des erfassten Gewichtsverlaufs (G), Signale zum Steuern eines Weitertransports der Lebensmittelportion (3) ausgibt.

8. Verfahren nach einem der vorangegangenen Ansprüche, **dadurch gekennzeichnet, dass** in zwei oder mehreren parallelen Transportspuren (S1, S2, S3) jeweils ein Gewichtsverlauf (G) einer Lebensmittelportion (3) mittels der Wägevorrichtung (7) beim Auf- und/oder Abfördern erfasst wird.

9. Lebensmittelverarbeitungssystem (1) mit einer Wägevorrichtung (7), einem ersten Fördermittel (5) und/oder einem zweiten Fördermittel (13), wobei das erste Fördermittel (5) angeordnet ist eine Lebensmittelportion (3) auf die Wägevorrichtung (7) aufzufördern und das zweite Fördermittel (13) angeordnet ist eine Lebensmittelportion (3) von der Wägevorrichtung (7) abzufördern, und die Wägevorrichtung (7) eine Waage (9) umfasst, dass das Lebensmittelverarbeitungssystem (1) des Weiteren eine elektronische Auswerteeinheit (23) umfasst, welche dazu konfiguriert ist, einen Gewichtsverlauf (G) beim Auffördern der Lebensmittelportion (3) auf die Wägevorrichtung (7) und/oder einen Gewichtsverlauf (G) beim Abfördern der Lebensmittelportion (3) von der Wägevorrichtung (7) zu erfassen, und **dadurch gekennzeichnet, dass** die Auswerteeinheit (23) dazu konfiguriert ist, den ermittelten Gewichtsverlauf (G) mit Soll-Werten zu vergleichen und Differenzwerte zu ermitteln.

10. Lebensmittelverarbeitungssystem, nach Anspruch 9, **gekennzeichnet durch** einen Sensor (25), welcher dazu konfiguriert ist, eine Position der Lebensmittelportion (3) zu erfassen und ein Signal an die Auswerteeinheit (23) zu senden um eine Gewichtsmessung zu veranlassen.

11. Lebensmittelverarbeitungssystem, nach einem der Ansprüche 9 oder 10, **dadurch gekennzeichnet**, ein Gruppierband (31) zum Zusammenfahren von Lebensmittelportionen (3) aufzuweisen, wobei eine Steuerungseinheit (27) dazu konfiguriert ist, das Gruppierband (31) in Abhängigkeit des erfassten Gewichtsverlaufs (G) zu steuern.

12. Lebensmittelverarbeitungssystem, nach einem der Ansprüche 9 bis 11, **dadurch gekennzeichnet**, ein Sortierband (29) zum Sortieren von Lebensmittelportionen (3) aufzuweisen, wobei eine Steuerungseinheit (27) dazu konfiguriert ist, das Sortierband (29) in Abhängigkeit des erfassten Gewichtsverlaufs (G) zu steuern.

13. Lebensmittelverarbeitungssystem, nach einem der Ansprüche 9 bis 12, **dadurch gekennzeichnet, dass** die Wägevorrichtung (7) zwei oder mehrere parallele Transportspuren (S1, S2, S3) mit jeweils einer Waage (9) aufweist.

## Claims

1. A method for weighing a food portion (3), comprising the following steps:
- conveying a food portion (3) from a first conveying means (5) onto a weighing device (7) arranged downstream and/or conveying a food portion (3) away from the weighing device (7) onto a second conveying means (13) arranged downstream,
- recording a weight curve (G) by means of the weighing device (7) while conveying the food portion (3) onto and away from the same, respectively,
- evaluating the recorded weight curve (G) by means of an electronic evaluation unit (23),
**characterized in that**
one or more measuring point/s (M) of the recorded weight curve (G) are compared with set values and, in particular, differential values can be obtained.

2. The method according to claim 1, **characterized in that** one or more measuring point/s (M) of the recorded weight curve (G) are compared with predetermined tolerance limits.

3. The method according to any one of the preceding claims, **characterized in that** a maximum (Fₘₐₓ) of the weight curve (G) is determined.

4. Method according to any one of the preceding claims, **characterized in that** the food portion (3) is cut from a product loaf (17) by means of a cutting machine (15) and falls down onto the weighing device (7) for recording the weight curve (G).

5. The method according to any one of the preceding claims, **characterized in that** a position of the food portion (3) is detected by means of a sensor (25) outputting a signal to the evaluation unit (23) in order to cause the weight force (F) of the food portion (3) to be detected.

6. The method according to any one of the preceding claims, **characterized in that** an external signal, in particular from a cutting machine (15), triggers the detection of the weight force (F) of the food portion (3).

7. The method according to any one of the preceding claims, **characterized in that** a control unit (27) outputs signals for controlling further transport of the food portion (3) as a function of the recorded weight curve (G).

8. The method according to any one of the preceding claims, **characterized in that** in two or more parallel transport tracks (S1, S2, S3) a weight curve (G) of a food portion (3) is recorded by means of the weighing device (7) during conveyance onto and/or from the same, respectively.

9. A food processing system (1) comprising:
a weighing device (7), a first conveyor means (5) and/or a second conveyor means (13), wherein the first conveyor means (5) is arranged to convey a food portion (3) onto the weighing device (7) and the second conveyor means (13) is arranged to convey a food portion (3) away from the weighing device (7),
and the weighing device (7) comprises a scale (9), the food processing system (1) further comprises an electronic evaluation unit (23) which is configured to record a weight curve (G) during conveyance of the food portion (3) onto the weighing device (7) and/or a weight curve (G) during conveyance of the food portion (3) away from the weighing device (7), and
**characterized in that**
the evaluation unit (23) is configured to compare the recorded weight curve (G) with set values and to obtain difference values.

10. The food processing system according to claim 9, **characterized by** a sensor (25), which is configured to detect a position of the food portion (3) and to send a signal to the evaluation unit (23) to initiate a weight measurement.

11. The food processing system according to any one of claims 9 to 10, **characterized in that** it comprises a grouping belt (31) for grouping food portions (3), wherein a control unit (27) is configured to control the grouping belt (31) as a function of the recorded weight curve (G).

12. The food processing system according to any one of claims 9 to 11, **characterized in that** it comprises a sorting belt (29) for sorting food portions (3), wherein a control unit (27) is configured to control the sorting belt (29) as a function of the recorded weight curve (G).

13. The food processing system, according to any one of claims 9 to 12, **characterized in that** the weighing device (7) includes two or more parallel transport tracks (S1, S2, S3) each having a scale (9).

## Revendications

1. Procédé de pesage d'une portion de denrée alimentaire (3), comprenant les étapes de procédé ci-dessous consistant à :
- amener une portion de denrée alimentaire (3) d'un premier moyen de transport (5) jusqu'à un dispositif de pesage (7) agencé en aval et/ou évacuer une portion de denrée alimentaire (3) du dispositif de pesage (7) vers un second moyen de transport (13) agencé en aval,
- détecter un profil de poids (G) à l'aide du dispositif de pesage (7) lors de l'amenée et/ou de l'évacuation de la portion de denrée alimentaire (3),
- évaluer le profil de poids détecté (G) au moyen d'une unité d'évaluation électronique (23), **caractérisé en ce qu'**un ou plusieurs points de mesure (M) du profil de poids détectée (G) sont comparés à des valeurs de consigne, et en particulier des valeurs de différence sont déterminées.

2. Procédé selon la revendication 1, **caractérisé en ce qu'**un ou plusieurs points de mesure (M) du profil de poids détecté (G) sont comparés à des limites de tolérance prédéfinies.

3. Procédé selon l'une quelconque des revendications précédentes, **caractérisé en ce qu'**un maximum (Fₘₐₓ) du profil de poids (G) est déterminé.

4. Procédé selon l'une quelconque des revendications précédentes, **caractérisé en ce que** la portion de denrée alimentaire (3) est découpée à partir d'une meule de produit (17) au moyen d'une machine de découpe (15) et tombe sur le dispositif de pesage (7), dans lequel le profil de poids (G) est détecté.

5. Procédé selon l'une quelconque des revendications précédentes, **caractérisé en ce qu'**une position de la portion de denrée alimentaire (3) est détectée au moyen d'un capteur (25), dans lequel ce dernier délivre un signal à l'unité d'évaluation (23) pour déclencher la détection du poids (F) de la portion de denrée alimentaire (3).

6. Procédé selon l'une quelconque des revendications précédentes, **caractérisé en ce qu'**un signal externe, en particulier d'une machine de découpe (15), déclenche la détection du poids (F) de la portion de denrée alimentaire (3).

7. Procédé selon l'une quelconque des revendications précédentes, **caractérisé en ce qu'**une unité de commande (27) émet des signaux pour commander un transport ultérieur de la portion de denrée alimentaire (3) en fonction du profil de poids (G) détecté.

8. Procédé selon l'une quelconque des revendications précédentes, **caractérisé en ce que** dans deux pistes de transport parallèles (S1, S2, S3) ou plus, un profil de poids (G) d'une portion de denrée alimentaire (3) est détectée au moyen du dispositif de pesage (7) lors de l'amenée et/ou de l'évacuation.

9. Système de traitement de denrée alimentaire (1) avec un dispositif de pesage (7), un premier moyen de transport (5) et/ou un second moyen de transport (13), dans lequel le premier moyen de transport (5) est agencé pour amener une portion de denrée alimentaire (3) jusque sur le dispositif de pesage (7) et le second moyen de transport (13) est agencé pour évacuer une portion de denrée alimentaire (3) hors du dispositif de pesage (7), et le dispositif de pesage (7) comprend une balance (9), dans lequel le système de traitement de denrée alimentaire (1) comprend en outre une unité d'évaluation électronique (23) qui est configurée pour détecter un profil de poids (G) lors de l'amenée de la portion de denrée alimentaire (3) sur le dispositif de pesage (7) et/ou un profil de poids (G) lors de l'évacuation de la portion de denrée alimentaire (3) hors du dispositif de pesage (7), et **caractérisé en ce que** l'unité d'évaluation (23) est configurée pour comparer le profil de poids déterminé (G) avec des valeurs de consigne et pour déterminer des valeurs de différence.

10. Système de traitement de denrée alimentaire selon la revendication 9, **caractérisé par** un capteur (25) qui est configuré pour détecter une position de la portion de denrée alimentaire (3) et pour envoyer un signal à l'unité d'évaluation (23) afin d'effectuer une mesure de poids.

11. Système de traitement de denrée alimentaire selon l'une des revendications 9 ou 10, **caractérisé en ce qu'**il comprend une bande de regroupement (31) pour assembler des portions de denrée alimentaire (3), dans lequel une unité de commande (27) est configurée pour commander la bande de regroupement (31) en fonction du profil de poids détecté (G).

12. Système de traitement de denrée alimentaire selon l'une quelconque des revendications 9 à 11, **caractérisé en ce qu'**il comprend une bande de tri (29) pour trier des portions de denrée alimentaire (3), dans lequel une unité de commande (27) est configurée pour commander la bande de tri (29) en fonction du profil de poids détecté (G).

13. Système de traitement de denrée alimentaire selon l'une quelconque des revendications 9 à 12, **caractérisé en ce que** le dispositif de pesage (7) présente deux pistes de transport parallèles (S1, S2, S3) ou plus, chacune avec une balance (9).
